# EUROPEAN PATENT APPLICATION

(11) **EP 2 716 707 A1**
(43) Date of publication of application: **09.04.2014**
(21) Application number: 12792383.7
(22) Date of filing: 31.05.2012
(51) Int. Cl.: C08L 51/00, C08J 5/18, C08L 33/12

(54) **ACRYLIC RESIN COMPOSITION, MOLDED OBJECT THEREOF, PROCESS FOR PRODUCING FILM, AND ACRYLIC RESIN FILM**

(30) Priority: 31.05.2011 JP 2011121739
(71) Applicant: Mitsubishi Rayon Co., Ltd., Tokyo 100-8253 (JP)
(72) Inventor: YAMAGUCHI, Yuko, Otake-shi Hiroshima 739-0693 (JP); OOAIRA, Kazuya, Otake-shi Hiroshima 739-0693 (JP); ABE, Junichi, Otake-shi Hiroshima 739-0693 (JP)
(74) Representative: Ter Meer Steinmeister & Partner
(86) International application number: PCT/JP2012/064031
(87) International publication number: WO 2012/165526

(57) **Abstract**

An acrylic resin composition which comprises 100 parts by mass of a rubber-containing multi-stage polymer (I) and 0-10 parts by mass of a thermoplastic polymer (II) and which satisfies: (1) a molded object of the acrylic resin composition has a modulus in flexure, measured at a temperature of 23ºC and a testing speed of 2 mm/min in accordance with ISO 178, of 400 MPa or lower, (2) in an examination with a dynamic viscoelasticity measurement device in the tensile mode, the acrylic resin composition, in the temperature range of 80ºC and higher, shows a peak at 85ºC or higher, and (3) when the acrylic resin composition is extruded at a constant rate (1.57 cm³/min) under the conditions of a capillary diameter φ of 1 mm, an L/D of 16, and a temperature of 230ºC and the strand thereof is hauled at a constant rate (10 m/min), then the value of melt tension is 0.03 N or more. This acrylic resin composition has high weatherability, flexibility, and heat resistance.

## Description

### TECHNICAL FIELD

The present invention relates to an acrylic resin composition from which a molded object simultaneously attaining high weatherability, flexibility, and heat resistance is molded.

### BACKGROUND ART

For the purposes of protecting a surface of gardening materials, an outdoor building decoration material such as an artificial bamboo fence and a corrugated panel as well as a window frame, an entrance door, and a home appliance and of imparting design, a method of laminating a decorative sheet with a printed pattern and made of a polyvinyl chloride on the surface of these members has heretofore been known. The polyvinyl chloride resin has the advantages of being excellent in thermoformability and inexpensive. However, since the polyvinyl chloride resin has the drawback of poor weatherability, it is not so much suitable for use in outdoors.

Accordingly, a decorative sheet improved in weatherability, which is obtained by laminating an acrylic resin film on a surface of a decorative sheet made of polyvinyl chloride resin, has been widely used. The decorative sheet having the above-described structure is widely used in the region where a temperature is relatively low and sunlight is weak, such as Europe.

As a material for the acrylic resin film, various resin compositions have been proposed and put into practical use. Particularly, as the material for giving an acrylic resin film excellent in weatherability and transparency as well as in resistance against stress whitening such as bend whitening tendency, there has been known a multistage copolymer comprising alkyl acrylate, alkyl methacrylate, and a graft crossing agent as constituent components of a polymer and having a specific structure comprising an elastic polymer, an intermediate polymer, and a hard polymer (Patent Literature 1 and Patent Literature 2).

However, in the case where the decorative sheet is used in the regions where a temperature is high and sunlight is strong, such as USA and Africa, the weatherability is insufficient, leading to a short usable period, the heat resistance is insufficient, and the mechanical strength is insufficient under a high temperature. In short, the sheet obtained by laminating the acrylic resin film on the surface of the polyvinyl chloride resin sheet is not suitable for use in the high-temperature strong sunlight regions.

Accordingly, a method for producing a decorative sheet consisting of an acrylic resin in place of the polyvinyl chloride resin has been contemplated. However, the acrylic resins have poorer flexibility than the polyvinyl chloride resins. Therefore, in the case where such a decorative sheet is laminated on a substrate such as a steel plate and the substrate is subjected to bending at an ordinary temperature for achieving a shape of a member such as a window frame, a crack can occur in some cases at the bent portion of the decorative sheet. Therefore, there is a problem that the substrate exposed due to the crack is exposed to sunlight and so forth to be corroded.

As a method for improving flexibility of the acrylic resin for the purpose of preventing the crack, there has been known a method of reducing a glass transition temperature (Tg) by adjusting a type and a ratio of a monomer to be used for the hard polymer in the above-described multistage polymer. However, since heat resistance is reduced when Tg of the acrylic resin is reduced, it is difficult to use the acrylic resin in the high-temperature strong sunlight region.

Also, as a method for improving flexibility of acrylic resins, there has been known a method of increasing a ratio of the elastic polymer in the multistage polymer (Patent Literature 3 and Patent Literature 4). However, when the ratio of the elastic polymer is excessively high, thickness accuracy of a molded object is deteriorated, or productivity in molding is deteriorated due to reduced fluidity. Therefore, there is a limit for increasing the ratio of the elastic polymer, and it can be said that the flexibility of the acrylic resin described in Patent Literature 3 is still not satisfactory.

As described above, it has been difficult to simultaneously attain high weatherability, flexibility, and heat resistance with the conventional technologies.

[Patent Document 1] Japanese Examined Patent Application Publication No. S62-19309
[Patent Document 2] Japanese Examined Patent Application Publication No. S63-8983
[Patent Document 3] Japanese Examined Patent Application Publication No. S63-20459
[Patent Document 4] Japanese Examined Patent Application Publication No. H06-45737

### DISCLOSURE OF THE INVENTION

### Problems to be Solved by the Invention

An object of the present invention is to provide an acrylic resin composition which simultaneously attains high weatherability, flexibility, and heat resistance. Particularly, the object is to provide an acrylic resin composition which is suitably used as a material for producing a molded object such as a film which is suitable for use in a wide area including high-temperature strong sunlight regions and is free from problems such as a crack when laminated with a substrate and subjected to bending at an ordinary temperature.

### Means for Solving the Problems

The present invention provides the following [1] to [6].

[1] An acrylic resin composition comprising a rubber-containing multistage polymer (I) and 0 to 10 parts by mass of a thermoplastic polymer (II) (relative to 100 parts by mass of the rubber-containing multistage polymer (I)) and satisfying the following conditions (1), (2), and (3).
   (1) A value of flexural modulus of a molded object, which is measured in accordance with ISO 178 at a temperature of 23°C and a test speed of 2 mm/min, is 400 MPa or less. The molded object has a thickness of 4 mm, a length of 80 mm, and a width of 10 mm.
   (2) A value of a peak which appears in a range of 80°C or higher and is measured with a tension mode of a dynamic viscoelasticity measurement device is 85°C or more. A test piece used in the measurement is a sheet having a width of 6 mm and a thickness of 1 mm and obtained by molding the acrylic resin composition, and an initial chuck-to-chuck distance of the test piece is 2 cm.
   (3) A value of melt tension of a strand obtained by extruding the acrylic resin composition under the conditions of a capillary diameter φ = 1 mm, L/D = 16, and a temperature of 230°C at a constant speed (1.57 cm³/min), which is measured by taking off the strand at a constant speed (10 m/min), is 0.03 N or more.
[2] The acrylic resin composition according to [1], wherein the rubber-containing multistage polymer (I) and the thermoplastic polymer (II) are respectively defined as follows.

### Rubber-Containing Multistage Polymer (I)

A rubber-containing multistage polymer obtainable by polymerizing a monomer (b) comprising alkyl methacrylate containing an alkyl group having 1 to 4 carbon atoms in the presence of an elastic polymer (A) obtained by polymerizing a monomer (a) comprising at least one monomer selected from the group consisting of alkyl acrylate (a1) containing an alkyl group having 1 to 8 carbon atoms and alkyl methacrylate (a2) containing an alkyl group having 1 to 4 carbon atoms and a crosslinkable monomer (a4).

### Thermoplastic Polymer (II)

A thermoplastic polymer which is a polymer consisting of 50 to 100 mass% of a methylmethacrylate unit and 0 to 50 mass% of at least one vinyl monomer unit copolymerizable with the methylmethacrylate unit and having a reduced viscosity of 0.2 to 2 g/L which is measured by dissolving 0.1 g thereof into 100 mL of chloroform at 25°C.
[3] The acrylic resin composition according to [2], wherein the following conditions (4) and (5) are satisfied.
(4) A ratio of the elastic polymer (A) in 100 mass% of the rubber-containing multistage polymer (I) is 50 mass% or more.
(5) An amount of the crosslinkable monomer (a4) comprised in the elastic polymer (A) of the rubber-containing multistage polymer (I) is 0.15 to 0.60 mass% relative to 100 mass% in total of the monomers of the elastic polymer (A).
[4] A molded object obtained by molding the acrylic resin composition defined in any one of [1] to [3].
[5] A method for producing a film by subjecting the acrylic resin composition defined in any one of [1] to [3] to calendar processing.
[6] An acrylic resin film obtained by the method defined in [5].

### Effects of the Invention

An acrylic resin composition of the present invention simultaneously attains high weatherability, flexibility, and heat resistance. Particularly, with the use of the acrylic resin composition of the present invention, it is possible to produce a molded object such as a film which is suitably used in a wide area including high-temperature strong sunlight regions and is free from problems such as a crack when the film is laminated with a substrate and subjected to bending at an ordinary temperature.

### PREFERRED MODE FOR CARRYING OUT THE INVENTION

A rubber-containing multistage polymer (I) to be used in the present invention may preferably be the one obtainable by polymerizing a monomer (b) comprising alkyl methacrylate containing an alkyl group having 1 to 4 carbon atoms in the presence of an elastic polymer (A) obtained by polymerizing a monomer (a) comprising at least one monomer selected from the group consisting of alkyl acrylate (a1) containing an alkyl group having 1 to 8 carbon atoms and alkyl methacrylate (a2) containing an alkyl group having 1 to 4 carbon atoms and a crosslinkable monomer (a4).

The alkyl acylate (a1) containing an alkyl group having 1 to 8 carbon atoms to be used as a material for the elastic polymer (A) may be straight chain or branched chain alkyl acrylate. Specific examples thereof include methyl acrylate, ethyl acrylate, propyl acrylate, butyl acrylate, 2-ethylhexyl acrylate, and n-octyl acrylate. These may be used alone or in combination of two or more. Particularly, alkyl acrylate having a low glass transition temperature (Tg) is preferred, and n-butyl acrylate is preferred. When Tg is low, the elastic polymer (A) has good impact resistance, and easy molding is enabled.

The alkyl methacrylate (a2) containing an alkyl group having 1 to 4 carbon atoms to be used as a material for the elastic polymer (A) may be straight chain or branched chain alkyl methacrylate. Specific examples thereof include methyl methacrylate, ethyl methacrylate, propyl methacrylate, and butyl methacrylate. These may be used alone or in combination of two or more.

Either one of the alkyl acrylate (a1) or the alkyl methacrylate (a2) may be used, or both of them may be used in combination. Particularly, a ratio of the alkyl acrylate (a1) in 100 mass% of the monomers used as the materials for the elastic polymer (A) may preferably be 50 mass% or more.

Also, a monomer (a3) having a double bonding other than the alkyl acrylate (a1) and the alkyl methacrylate (a2) or the crosslinkable monomer (a4) may be used in combination as the monomer used as the material for the elastic polymer (A).

Examples of the monomer (a3) having a double bonding other than the alkyl acrylate (a1) and the alkyl methacrylate (a2) include, for example, higher alkyl acrylate containing an alkyl group having 9 or more carbon atoms, lower alkoxy acrylate, an acrylate monomer such as cyano ethyl acrylate, acrylamide, acrylic acid, methacrylic acid, styrene, alkyl-substituted styrene, acrylonitrile, and methacrylonitrile.

The crosslinkable monomer (a4) is not limited to those capable of imparting rubber elasticity to a molded object to be obtained. For example, the crosslinkable monomer (a4) may be appropriately used depending on usage of the molded object such as in the case where heat resistance is strictly required. Examples of the crosslinkable monomer (a4) include, for example, alkylene glycol dimethacrylate such as ethylene glycol dimethacrylate, 1,3-butylene glycol dimethacrylate, 1,4-butylene glycol dimethacrylate, and propylene glycol dimethacrylate. Also, polyvinyl benzene such as divinyl benzene and trivinyl benzene may be used.

The crosslinkable monomer (a4) used as the material for the elastic polymer (A) forms crosslinking with the alkyl acrylate (a1) and/or the alkyl methacrylate (a2) to impart rubber elasticity to the polymer and forms crosslinking with a hard portion (B). Examples of those having the above-describe effects include allyl, methallyl, or crotyl ester of copolymerizable α,β-unsaturated carboxylic acid or dicarboxylic acid. Particularly, allyl ester of acrylic acid, methacrylic acid, maleic acid, or fumaric acid is preferred. Among the above, allyl methacrylate attains the excellent effects. As other examples, triallyl cyanurate and triallyl isocyanurate are also effective.

In 100 mass% in total of the monomers (a1) to (a4) mentioned above, a total amount of the alkyl acrylate (a1) and the alkyl methacrylate (a2) may preferably be 80 to 100 mass%, and an amount of the monomer (a3) may preferably be 0 to 20 mass%. An amount of the crosslinkable monomer (a4) may preferably be 0.1 to 3 mass%, more preferably 0.1 to 0.8 mass%, particularly preferably 0.15 to 0.70 mass%, in 100 mass% in total of the monomers (a1) to (a4). When the amount is 0.1 mass% or more, the rubber elasticity of the elastic polymer (A) is improved to enhance impact resistance of the molded object to be obtained. Also, when the amount is 3 mass% or less, the crosslinking between the elastic polymer (A) and the hard portion (B) is appropriately controlled to enable the molded object to be obtained to exhibit favorable flexibility.

The elastic polymer (A) may be polymerized in 2 or more stages. In such a case, monomer mixtures having different compositions may be polymerized. By the polymerization in 2 or more stages, control of a particle diameter of the multistage polymer (I) to be finally obtained is facilitated.

The elastic polymer (A) is obtained by a polymerization method such as emulsion polymerization, suspension polymerization, or the like. In the case of the emulsion polymerization, an emulsifier, a radical polymerization initiator, and a chain transfer agent may preferably be used.

As the emulsifier, an anionic, cationic, or nonionic surfactant is usable. The anionic surfactant is particularly preferred. Specific examples of the anionic surfactant include rosin soap, potassium oleate, sodium stearate, sodium myristate, N-sodium lauroyl sarcosinate, carboxylic acid such as dipotassium alkenyl succinate-based carboxylic acid, a sulfuric ester salt such as sodium laurylsulfate, sodium dioctyl sulfosuccinate, sodium dodecyl benzenesulfonate, sulfonate such as sodium alkyldiphenyl ether disulfonate-based sulfonate, and a phosphoric acid ester salt such as sodium polyoxyethylene alkylphenylether phosphate-based phosphoric acid ester salt. As a method for preparing an emulsion, there have been known a method of charging the monomer mixture in water and then adding the surfactant, a method of charging the surfactant in water and then adding the monomer mixture, and a method of charging the surfactant in the monomer mixture and then adding water. Among the above, the method of charging the monomer mixture in water and then adding the surfactant and the method of charging the surfactant in water and then adding the monomer mixture are preferred.

Specific examples of the radical polymerization initiator include a persulfate such as potassium persulfate and sodium persulfate, an organic peroxide such as t-butyl hydroperoxide, cumene hydroperoxide, and benzoyl peroxide, an azo compound such as azobisisobutyronitrile, a redox initiator obtained by combining the persulfate or the organic peroxide with a reducing agent. Among the above, the redox initiator is preferred, and, particularly, a sulfoxylate initiator obtained by combining ferrous sulfite, disodium ethylenediaminetetraacetate, sodium formaldehydesulfoxylate, and hydroperoxide is more preferred. The radical polymerization initiator may be added to one or both of a water phase and a monomer phase.

Specific examples of the chain transfer agent include alkyl mercaptan having 2 to 20 carbon atoms, mercapto acids, thiophenol, and carbon tetrachloride. The chain transfer agent may preferably be mixed during the polymerization of the hard portion (B).

A polymerization temperature is varied depending on a type and an amount of the polymerization initiator and may preferably be 40°C to 120°C, more preferably 60°C to 95°C.

A core portion having Tg exceeding 0°C may be polymerized in advance of the polymerization of the elastic polymer (A). The core portion may preferably be 0 to 10 mass% of the rubber-containing multistage polymer (I). The core portion may preferably be the one which is obtainable by polymerizing a monomer (a) comprising 10 to 50 mass% of alkyl acrylate (a1) containing an alkyl group having 1 to 8 carbon atoms, 20 to 70 mass% of alkyl methacrylate (a2) containing an alkyl group having 1 to 4 carbon atoms, 0 to 10 mass% of the monomer having a double bonding (a3) other than the alkyl acrylate (a1) containing an alkyl group having 1 to 8 carbon atoms and the alkyl methacrylate (a2), and 0.1 to 10 mass % of the crosslinkable monomer (a4) (total of (a1) to (a4) is 100 mass%).

The rubber-containing multistage polymer (I) is obtainable by polymerizing the monomer (b) comprising alkyl methacrylate (b1) containing an alkyl group having 1 to 4 carbon atoms in the presence of the above-described elastic monomer (A). The monomer (b) is polymerized to form the hard portion (B).

Specific examples of the alkyl methacrylate (b1) include those described above as the specific examples of the alkyl methacrylate (a2). These may be used alone or in combination of two or more.

As the monomer (b), a monomer (b2) having a double bonding other than the alkyl methacrylate (b1) may be used in combination. Specific examples of the monomer (b2) include those described above as the specific examples of the alkyl acrylate (a1) and the monomer (a3). These may be used alone or in combination of two or more.

An amount of the alkyl methacrylate (b1) in 100 mass% of the monomer (b) may preferably be 70 mass% or more, more preferably 85 mass% or more. Thus, it is possible to appropriately increase Tg of the hard portion (B) obtained by polymerizing the monomer (b) only.

The elastic polymer (b) may be polymerized in 2 or more stages. In such a case, monomer mixtures having different compositions may be polymerized.

A polymerization reaction of the monomer (b) may preferably be performed in continuation from termination of the polymerization reaction of the elastic polymer (A) by using the obtained polymerization liquid as it is and adding thereto the monomer (b). Specific examples of an emulsifier, a radical polymerization initiator, a chain transfer agent in the polymerization are the same as the specific examples of the polymerization of the elastic polymer (A) described above. An amount of the chain transfer agent may preferably be 0.01 to 2 parts by mass, more preferably 0.1 to 1.5 parts by mass, most preferably 0.4 to 0.8 part by mass, relative to 100 parts by mass of the monomer (b). Flexibility of the molded object is high when the amount is 0.01 part by mass or more, and mechanical strength of the molded object tends to be high when the amount is 2 parts by mass or less.

Tg of the elastic polymer (A) may preferably be 0°C or less, more preferably -30°C or less. When Tg is 0°C or less, a molded object to be obtained has favorable impact resistance. Tg is a value which is measured and calculated as follows by using a dynamic viscoelasticity measurement device. A test piece is molded into a sheet having a width of 6 mm and a thickness of 1 mm, and a storage elastic modulus (E') and a loss elastic modulus (E") of the sheet are measured by using the dynamic viscoelasticity measurement device in accordance with ISO 6721-4 under the conditions of an initial chuck-to-chuck distance of 2 cm, a measurement frequency of 0.1 Hz, a measurement temperature range of -90°C to 150°C, a temperature increase rate of 2°C/min, and in a nitrogen stream of 200 mL/min and with a tensile mode, and tanδ (loss tangent) at each temperature is calculated by the equation of tanδ = E"/E'. Then, when the values of tanδ are plotted on the temperatures, two peaks appear. The temperature corresponding to the peak which appears at the lowest temperature is considered as Tg of the elastic polymer (A). Tg of the hard portion (B) may be 85°C or more, preferably 90°C or more. Owing to the above-specified Tg, the acrylic resin composition excellent in moldability is obtained, and the molded object has high heat resistance and high mechanical strength under a high temperature and is satisfactorily usable in the high-temperature strong sunlight regions. Tg of the hard portion (B) is a temperature corresponding to a value of a peak appearing in a range of 80°C or more in the dynamic viscoelasticity measurement performed in the same manner as in the above-described method of measuring Tg of the elastic polymer (A).

Also, after the termination of the polymerization reaction of the elastic polymer (A) and before performing the polymerization of the monomer (b), an intermediate portion (C) may be formed by sequentially polymerizing monomers having compositions attained by gradually reducing the content of the alkyl acrylate containing the alkyl group having 1 to 8 carbon atoms and gradually increasing the content of the alkyl methacrylate containing the alkyl group having 1 to 4 carbon atoms from the compositions of the monomers forming the elastic polymer (A). It is possible to improve transparency of the acrylic resin composition by the intermediate portion (C).

The intermediate portion (C) may preferably comprise as constituent components alkyl acrylate (c1) containing an alkyl group having 1 to 8 carbon atoms, alkyl methacrylate (c2) containing an alkyl group having 1 to 4 carbon atoms, another copolymerizable monomer (c3) having a double bonding which is used as required, and a crosslinkable monomer (c4) which is used as required.

Specific examples of the monomers (c1) to (c4) are the same as the specific examples of the monomers (a1) to (a4) of the elastic polymer (A) described above. In the case where a sum of the monomers (c1) to (c4) is 100 mass%, an amount of the monomer (c1) may preferably be 10 to 90 mass%, an amount of the monomer (c2) may preferably be 10 to 90 mass%, an amount of the monomer (c3) may preferably be 0 to 20 mass%, and an amount of the monomer (c4) may preferably be 0 to 10 mass%.

A ratio of the intermediate portion (C) in 100 mass% of the rubber-containing multistage polymer (I) may preferably be 0 to 35 mass%, more preferably 5 to 15 mass%. In the case where the intermediate portion (C) is contained, an elastic polymer (A)/intermediate portion (C)/hard portion (B) ratio may preferably be 50 to 60 mass%/5 to 15 mass%/25 to 45 mass%.

A ratio of the elastic polymer (A) in 100 mass% of the rubber-containing multistage polymer (I) may preferably be 50 mass% or more, more preferably 50 to 70 mass%. When the ratio is 50 mass% or more, the mechanical strength and flexibility of the molded object are more improved to enable suppression of cracks. Particularly, in the case where the molded object is a film, a rupture during molding can be suppressed. In the case of heating the film directly or after laminating the film on a resin sheet to a softening temperature or more and laminating on a surface of a three-dimensional resin molded object, woodwork product, or a metal molded object, a rupture, crack, and whitening are suppressed so that a molded object having high designability can be obtained. The molded object is suitable for processing at an ordinary temperature. More specifically, in the case where the molded object is laminated on a substrate such as a steel plate and the substrate is subjected to bending at an ordinary temperature for achieving a shape of a member such as a window frame, a crack does not occur at the bent portion, and the substrate is not exposed to sunlight and prevented from being corroded. When the amount of the elastic polymer (A) to be used is 70 mass% or less, the molded object to be obtained has excellent thickness accuracy, and deterioration in productivity during molding which is otherwise caused by deterioration in fluidity of the acrylic resin composition is prevented. A ratio of the hard portion (B) may preferably be 50 mass% or less, more preferably 20 to 50 mass%.

In the case of employing the emulsion polymerization, the rubber-containing multistage polymer (I) is recovered as a powder from a latex after the termination of the polymerization reaction. As a method for recovering as the powder, there has been known a method of performing solid-liquid separation by causing coagulation or salt precipitation by bringing the latex into contact with a coagulant, washing the polymer with water in an amount of 1 to 100 times by mass of the polymer, obtaining a powder in a wet state by a dehydration treatment such as filtering, and drying the wet powder in a squeeze dehydrator or a hot air drier such as a fluid drier. Alternatively, the latex may be directly dried by spray drying. A drying temperature and a drying time of the polymer may be appropriately decided depending on the type of the polymer.

Specific examples of the coagulant include an organic salt such as sodium acetate, calcium acetate, potassium formate, and calcium formate and an inorganic salt such as sodium chloride, potassium chloride, calcium chloride, magnesium chloride, and sodium sulfate. Among the above, the calcium salt such as calcium acetate and calcium chloride is preferred. Particularly, calcium acetate is more preferred from the viewpoints of hot water whitening resistance of the molded object and the advantage of reducing a water content of the recovered powder. The coagulants may be used alone or in combination of two or more. The coagulant is ordinarily used as an aqueous solution. A concentration of the coagulant, preferably of an aqueous solution of calcium acetate, may preferably be 0.1 mass% or more, more preferably 1 mass% or more, from the viewpoint of the advantage of stably coagulating and recovering the acrylic resin composition. Also, the concentration of the coagulant, preferably the aqueous solution of calcium acetate, may preferably be 20 mass% or less, more preferably 15 mass% or less, from the viewpoints of a suppressed amount of the coagulant remaining in the recovered powder and particularly of the advantage of hardly deteriorating properties of the molded object such as hot water whitening resistance and colorability. Also, when the concentration exceeds 20 mass%, calcium acetate can be precipitated due to saturation at 10°C or less in some cases.

As a method for bringing the latex into contact with the coagulant, there has been known a method of continuously adding the latex to the solution of the coagulant while stirring and continuing the stirring for a predetermined period of time and a method of bringing the latex into contact with the solution of the coagulant by continuously injecting them at a predetermined ratio into a container provided with a stirrer and then continuously withdrawing a mixture containing a coagulated powder and water from the container. An amount of the coagulant solution may preferably be 10 parts by mass or more and 500 parts by mass or less relative to 100 parts by mass of the latex. A temperature in the coagulation step may preferably be 30°C or more and 100°C or less.

A weight average molecular weight of an acetone soluble portion of the rubber-containing multistage polymer (I) may preferably be 30000 to 100000, more preferably 35000 to 75000. When the weight average molecular weight is 30000 or more, mechanical strength of a molded object to be obtained is improved to suppress breakage. Also, in the case where the molded object is a film, rupture during molding is suppressed. Further, in the case of heating the film directly or after laminating the film on a resin sheet to a softening temperature or more and then laminating on a surface of a three-dimensional resin molded object, a woodwork product, or a metal molded object or in the case of laminating the molded object on a substrate such as a steel plate and then performing bending into a shape of a window frame or the like at an ordinary temperature, it is possible to suppress rupture and breakage, thereby attaining high mechanical strength and easy handling of the molded object. When the weight average molecular weight is 100000 or less, a molded object to be obtained has high flexibility and is suitable for processing at an ordinary temperature. More specifically, in the case of laminating the molded object on a substrate such as a steel plate and then bending the substrate into a shape of a member such as a window frame or the like at an ordinary temperature, a crack does not occur at the bent portion, and the substrate is not exposed to sunlight and is thus prevented from being corroded.

The weight average molecular weight is a value measured by gel permeation chromatography (GPC) of the acetone soluble portion of the rubber-containing multistage polymer (I). More specifically, the value measured by the following method is used.
[1] 1 g of the rubber-containing multistage polymer (I) is dissolved into 50 g of acetone, followed by reflux at 70°C for 4 hours, thereby obtaining an acetone soluble portion.
[2] The obtained extract liquid is subjected to centrifugation at 4°C and 14000 rpm for 30 minutes by using CRG SERIES (product of Hitachi, Ltd.)
[3] An acetone insoluble portion is removed by decantation, and then an acetone soluble portion is obtained by drying at 50°C for 24 hours by a vacuum drier. The acetone soluble portion is subjected to the GPC measurement under the following conditions, and the weight average molecular weight is calculated from a calibration curve in terms of standard polystyrene.

Apparatus: HLC8220; product of Toso Corporation
Column: TSK gel Super Multipore HZ-H, product of Toso Corporation (inner diameter: 4.6 mm x length: 15 cm x 2, elimination limit: 4x107 (estimated value))
Eluent: tetrahydrofuran (THF)
Eluent flow rate: 0.35 ml/min
Measurement temperature: 40°C
Sample injection amount: 10 µm (sample concentration: 0.1 %)

The weight average molecular weight of the acetone soluble portion of the rubber-containing multistage polymer (I) may be adjusted by appropriately changing the amount of the chain transfer agent during the polymerization.

The thermoplastic polymer (II) to be used in the present invention may preferably be a polymer consisting of 50 to 100 mass% of a methyl methacrylate unit and 0 to 50 mass% of at least one vinyl monomer unit which is copolymerizable with the methyl methacrylate unit. With the use of the thermoplastic polymer (II), moldability of the acrylic resin composition is improved. More specifically, since melt tension of the acrylic resin composition is increased by blending the thermoplastic polymer (II), a take-off property is improved to hardly cause rupture in the case of calendar molding. Also, in the case of melt- extruding into a film, it is possible to prevent deterioration in productivity which is otherwise caused by a reduction in delivery amount and further to improve thickness accuracy of a molded object such as a film.

Examples of the vinyl monomer which is to be used for the thermoplastic polymer (II) and is copolymerizable with methyl methacrylate include, for example, an aromatic vinyl compound, a vinylcyan compound, alkyl methacrylate other than methyl methacrylate, and alkyl acrylate. Specific examples of the aromatic vinyl compound include styrene, α-substituted styrene, core-substituted styrene, and derivatives thereof (e.g. α-methylstyrene, chlorostyrene, vinyltoluene). Specific examples of the vinylcyan compound include acrylonitrile and methacrylonitrile. Specific examples of the alkyl methacrylate other than methyl methacrylate include ethyl methacrylate, propyl methacrylate, and butyl methacrylate. Specific examples of the alkyl methacrylate include butyl methacrylate. Specific examples of the alkyl acrylate are the same as the specific examples of the alkyl acrylate (a1) used for the above-described elastic polymer (A).

The thermoplastic polymer (II) is obtainable by a polymerization method such as emulsion polymerization, suspension polymerization, or the like. Among the above, the emulsion polymerization is preferred from the viewpoint of obtaining the polymer as a powder or a granule. In the case of the emulsion polymerization, an emulsifier, a radical polymerization initiator, and a chain transfer agent may preferably be used. Specific examples of the emulsifier, radical polymerization initiator, and chain transfer agent are the same as the specific examples used for the above-described rubber-containing multistage polymer (I). Preferably 40°C to 80°C though it depends on the type and amount of the polymerization initiator.

A method of recovering the thermoplastic polymer (II) from a latex after termination of the emulsion polymerization reaction is the same as the above-described method for recovering the rubber-containing multistage polymer (I) as a powder.

A reduced viscosity measured by dissolving 0.1 g of the thermoplastic polymer (II) into 100 mL of chloroform and at 25°C may preferably be 0.2 to 2 g/L. When the reduced viscosity is 0.2 g/L or more, melt tension of the acrylic resin composition is satisfactory, and effects of improvements in take-off property in calendar molding, molded object thickness accuracy, delivery amount accuracy in melt extrusion, and film thickness accuracy are exhibited. Also, when the reduced viscosity is 2 g/L or less, compatibility with the multistage polymer (I) is satisfactory to enable improvement in melt tension of the acrylic resin composition during molding.

A content of the thermoplastic polymer (II) may preferably be 0 to 10 parts by mass, more preferably 0.1 to 10 parts by mass, relative to 100 parts by mass of the rubber-containing multistage polymer (I). When the content is 0.1 parts by mass or more, melt tension of the acrylic resin composition is satisfactorily high, and effects of improvements in take-off property in calendar molding, molded object thickness accuracy, delivery amount accuracy in melt extrusion, and film thickness accuracy are satisfactorily exhibited. Also, when the content is 10 parts by mass or less, an excessive increase in melt tension of the acrylic resin composition is prevented, thereby preventing deterioration in surface appearance of a molded object.

The acrylic resin composition of the present invention is obtainable, for example, by separately recovering the rubber-containing multistage polymer (I) and the thermoplastic polymer (II) each as a powder and then melt-mixing the powders by a method such as extrusion kneading and roll kneading. Alternatively, in the case of obtaining each of the rubber-containing multistage polymer (I) and the thermoplastic polymer (II) by the emulsion polymerization, the acrylic resin composition is obtainable by mixing a latex after termination of the polymerization reaction of the rubber-containing multistage polymer (I) with a latex after termination of the polymerization reaction of the thermoplastic polymer (II) and then recovering it as a powder.

A molded object obtained from the acrylic resin composition of the present invention has a flexural modulus of 400 MPa or less, preferably 200 MPa or less, which is measured in accordance with ISO 178 at 23°C and a test speed of 2 mm/min. When the flexural modulus is 400 MPa or less, the molded object such as a film has high flexibility and is suitable for processing at an ordinary temperature. More specifically, in the case where the molded object is laminated on a substrate such as a steel plate and the substrate is subjected to bending at an ordinary temperature for achieving a shape of a member such as a window frame, a crack does not occur at the bent portion, and the substrate is not exposed to sunlight and prevented from being corroded. The flexural modulus is a value obtained from a molded object by molding the acrylic resin composition into the size of a length of 80 mm, a width of 10 mm, and a thickness of 4 mm and calculating from a flexural stress of the molded object measured at a temperature of 23°C, a distance between fulcrums of 64 mm, a test speed of 2 mm/min, and deflection of 0.088 mm and 0.44 mm. As a means for keeping the flexural modulus of the molded object within the above-specified range, the amount of the crosslinkable monomer (a4) included in the monomers of the elastic polymer (A) of the rubber-containing multistage polymer (I) may preferably be kept to 0.1 to 3 mass%, more preferably 0.1 to 0.8 mass%, particularly preferably 0.15 to 0.70 mass% in 100 mass% in total of the monomers (a1) to (a4).

A value of melt tension of the acrylic resin composition of the present invention may be 0.03 N or more, preferably 0.03 to 2 N, more preferably 0.04 to 1.5 N. The melt tension is one of indexes for determining moldability such as calendar moldability, extrusion moldability, blow moldability, and foam moldability, and an improvement in melt tension is considered to be an improvement in moldability. When the melt tension value of the acrylic resin composition is within the above-specified range, a take-off property is favorable to hardly cause rupture in calendar molding and melt-extrusion molding. In the case where melt extrusion is performed to obtain a film, it is possible to prevent deterioration in productivity which is otherwise caused by a reduction in delivery amount, and, further, favorable thickness accuracy of the molded object such as a film is attained. The melt tension is a value detected by extruding the acrylic resin composition under the conditions of a capillary diameter φ = 1 mm, L/D = 16, and a temperature of 230°C at a constant speed (1.57 cm³/min), and then taking off the obtained strand at a constant speed (10 m/min).

It is possible to achieve the melt tension of the acrylic resin composition of 0.03 N or more by keeping the amount of the crosslinkable monomer (a4) contained in the elastic polymer (A) of the rubber-containing multistage polymer (I) to 0.60 mass% or more relative to 100 mass% in total of the monomers (a1) to (a4). However, in this case, crosslinking between the elastic polymer (A) and the hard portion (B) is excessively strong to reduce flexibility of a molded object to be obtained.

The acrylic resin composition of the present invention may contain a compounding agent as required. Examples of the compounding agent include, for example, a stabilizer, a lubricant, a plasticizer, an impact resistance auxiliary agent, a filler, an antibacterial agent, an antifungal agent, a foaming agent, a releasing agent, an antistatic agent, a coloring agent, a matting agent, a UV absorber, and a thermoplastic polymer. For example, the compounding agent is added to the latex of the polymer liquid to obtain a powder from a mixture of the compounding agent and the polymer. Also, the compounding agent may be added after obtaining a powder from the latex. Also, in the case of producing a molded object by melt-extrusion, the compounding agent may be supplied together with the powder of the latex to a kneader provided in a molding machine. The kneader provided in the molding machine means a uniaxial extruder or a biaxial extruder, for example.

The acrylic resin composition of the present invention is obtainable also by a multistage mixing, for example, by preparing a master batch by mixing a part of an entire amount of the rubber-containing multistage polymer (I), the thermoplastic polymer (II), and the compounding agent as required and then mixing the master batch with the rest of the rubber-containing multistage polymer (I). Also, in the case of subjecting the acrylic resin composition to melt-extrusion molding, a molded object is obtainable by: mixing a part of an entire amount of the rubber-containing multistage polymer (I), the thermoplastic polymer (II), and the compounding agent as required; preparing master batch pellets by supplying the mixture to a uniaxial extruder or a biaxial extruder to perform melting and kneading; mixing the master batch pellets with the rest of the rubber-containing multi-stage polymer (I); supplying the mixture again to the uniaxial extruder or biaxial extruder to perform melting and kneading and melt-extrusion.

The molded object obtained by molding the acrylic resin composition of the present invention may be in the form of any one of a film, a sheet, a three-dimensional structure, and the like. Particularly, the film-like molded object is preferred. Examples of usages of the molded object include, for example, greenhouses for agricultural use, marking films, posters, wallpapers, foamed sheets, vinyl chloride leathers for use in outdoors, outer wall building materials such as vinyl chloride steel plate roof materials and siding materials, interior and exterior materials for cars, substitutes for coatings for furniture, interior materials for elevators, rain gutters, floor materials, corrugated panels, decorative pillars, lightings, coating materials for members of water-using sections such as a bathroom and a kitchen. As other examples, the molded object may be used for heat insulating films, protection films for polarizing films used for polarizing plates of liquid crystal displays etc., and phase difference films used for phase difference plates for viewing angle compensation and phase difference compensation. As used herein, "film-like molded object" include a sheet.

Various molded objects such as a film, a sheet, an injection-molded object, and a hollow molded object are obtainable by molding the acrylic resin composition of the present invention by methods such as melt-extrusion molding including a solution casting method, a T-die method, an inflation method, etc., calendar molding, injection molding, vacuum molding, blow molding, die molding, and compression molding. A melting temperature during molding may preferably be 100°C to 280°C.

In the case of forming a film from the acrylic resin composition of the present invention, the film formation may be performed by calendar processing. A thickness of the film may preferably be 10 to 500 µm, more preferably 15 to 200 µm, and particularly preferably 40 to 200 µm. When the thickness of the film is within the above-specified range, the film has appropriate rigidity as well as a favorable lamination property and secondary workability.

The acrylic resin film of the present invention may be used for various usages as it is and may be laminated on a substrate. The transparent acrylic resin film laminated on the substrate serves as a substitute for a clear coating and enables to make use of a tone of a color of the substrate. In the usage of making use of the tone of a color of the substrate, the acrylic resin film is excellent in transparency, depth, and upscale image as compared to polyvinyl chloride films and polyester films. Examples of the substrate include, for example, a molded object made of a resin or a metal, such as a steel plate, and a woodwork product. The resin which forms the substrate may preferably be a thermoplastic resin which is capable of melt-adhesion to the acrylic resin film. Specific examples of the thermoplastic resin include an acrylonitrile-butadiene-styrene (ABS) resin, an acrylonitrile-styrene (AS) resin, a polystyrene resin, a polycarbonate resin, a vinyl chloride resin, an acrylic resin, a polyester resin, and a resin containing any one of the above resins as a main component. Among the above, the ABS resin, AS resin, polycarbonate resin, vinyl chloride resin, and resin each containing any one of the above resins as a main component are preferred from the viewpoint of adhesiveness. Also, in the case where the substrate is made of a resin of which melt-adhesion is difficult, such as a polyolefin resin, the acrylic resin film may be laminated after providing an appropriate adhesive layer.

In the case where the substrate has a two-dimensional shape and is made of a material capable of heat fusion bonding, it is possible to laminate the substrate and the acrylic resin film by a method such as heat lamination. When the substrate is made of a material of which heat fusion bonding is difficult, the acrylic resin film is laminated by using an adhesive or after performing adhesive processing on one of surfaces of the acrylic resin film. In the case where the substrate has a three-dimensional shape, it is possible to laminate the substrate and the acrylic resin film to each other by a molding method such as an insertion molding method in which the acrylic resin film preliminarily processed into a predetermined shape is inserted into an injection molding die and an in-mold molding method in which vacuum molding is performed in a die, followed by injection molding. Among the above, the in-mold molding method is preferred since it is possible to readily obtain a laminate having the acrylic resin film on its surface because, in the in-mold molding method, the acrylic resin film is molded into a three-dimensional shape by vacuum molding and then the resin which is the material for the substrate is cast into the obtained molded object by injection molding to be integrated with the molded object. Also, the in-mold molding method is preferred since the method is excellent in workability and economy because the molding of the acrylic resin film and the injection molding are performed in one step in the method.

In the case where one of the purposes of laminating the acrylic resin film on the substrate is protection of the substrate, it is preferable to add a UV absorber in order to impart weatherability to the acrylic resin film. A molecular weight of the UV absorber may preferably be 300 or more, more preferably 400 or more. When the UV absorber having molecular weight of 300 or more is used, it is possible to suppress malfunctions such as roller contamination due to adhesion of the resin to a transfer roller or the like when producing the film, for example. As the type of the UV absorber, benzotriazole-based and triazine-based UV absorbers each having a molecular weight of 400 or more is particularly preferred. Examples of commercially available products of the former UV absorber include Tinuvin 360 and Tinuvin 234 manufactured by BASF Japan Ltd. and ADK STAB LA-31 RG manufactured by Adeka Corporation, and Examples of commercially available products of the latter UV absorber include Tinuvin 1577 manufactured by BASF Japan Ltd. and ADK STAB LA-46 manufactured by Adeka Corporation (the product names are all trade names).

Also, it is preferable that a light stabilizer is added to the acrylic resin film. As the light stabilizer, a known light stabilizer may be used, and a radical scavenger such as a hindered amine-based light stabilizer is particularly preferred. Examples of commercially available products of the light stabilizer include ADK STAB LA-57 manufactured by Adeka Corporation and Sanol LS-770 (the product names are all trade names).

Weatherability of the acrylic resin film is enhanced by laminating the acrylic resin film molded by any one of molding methods on a surface which is the surface reverse to the surface adhered to the substrate. It is possible to impart further enhanced weatherability and chemical resistance by laminating a film comprising 2 or more layers including an acrylic resin and a fluorine resin. In the case of laminating the film comprising 2 or more layers of the acrylic resin and the fluorine resin, the fluorine resin layer may preferably be used as an outermost surface from the viewpoints of adhesiveness with the acrylic resin film and chemical resistance of a molded object to be obtained.

A surface treatment such as coating may be performed on the surface of the acrylic resin film as required in order to impart various functions. Examples of the surface treatment for function impartment include a printing treatment such as silk printing and inkjet printing, metal vapor deposition for imparting metallic tone or preventing reflection, sputtering, wet plating, surface hardening for surface hardness improvement, water repelling treatment or a photocatalyst layer formation treatment for stain prevention, an antistatic treatment for dust adhesion prevention or electromagnetic wave cutting, antireflection layer formation, an anti-glare treatment, and a matting treatment. As the printing treatment, a one-side printing treatment in which the printing is performed on one of the surfaces of the acrylic resin film is preferred. In the case of laminating the acrylic resin film on a surface of the substrate, reverse side printing in which the printed surface is the surface to be adhered to the substrate is preferred from the viewpoints of protecting the printed surface and imparting an upscale image.

### EXAMPLES

Hereinafter, the present invention will be specifically described by way of examples, but the present invention is not limited to the examples. In the following description, "part" means "part by mass", and "%" means "mass%". Abbreviations mean as follows.
MMA: methyl methacrylate
n-BA: n-butyl acrylate
1,3-BD: 1,3-butylene glycol dimethacrylate
AMA: allyl methacrylate
CHP: cumene hydroperoxide
RS-610NA: sodium mono-n-dodecyloxytetraoxyethylene phosphate (trade name: Phosphanol RS-610NA, manufactured by Toho Chemical Co., Ltd.)
G15: sodium alkylbenzenesulfonate (trade name: Neo Pelex G15, manufactured by Kao Corporation)
ASK: dipotassium alkenylsuccinate (trade name: Latemul ASK, manufactured by Kao Corporation)
n-OM: n-octylmercaptan
KPS: potassium persulfate
t-BH: t-butyl hydroperoxide
EDTA: disodium ethylenediaminetetraacetate

### Examples 1 to 11 and Comparative Examples 4 to 6

### [Preparation of Rubber-Containing Multistage Polymer (I-i)]

A polymerization vessel provided with a stirrer, a cooling tube, a thermocouple, and a nitrogen introduction tube was charged with 195 parts of deionized water and 1.0 part of G15, followed by heating to 75°C. Further, a mixture formed of 5 parts of deionized water, 0.20 part of sodium formaldehyde sulfoxylate, 0.0001 part of ferrous sulfate, and 0.0003 part of EDTA was added at once. Next, monomer components of 0.3 part of MMA, 4.7 parts of n-BA, and 0.027 part of AMA were delivered into the polymerization vessel by drops while stirring under nitrogen over 8 minutes together with 0.025 part of t-BH. The reaction was continued for 15 minutes to accomplish polymerization of a first elastic polymer (A1).

Subsequently, monomer components of 3.0 parts of MMA, 47.0 parts of n-BA, and 0.273 part of AMA were delivered into the polymerization vessel by drops over 120 minutes together with 0.250 part of t-BH. After that, the reaction was continued for 60 minutes to accomplish polymerization of a second elastic polymer (A2).

Subsequently, monomer components (component of hard portion (B)) of 40.5 parts of MMA, 4.5 parts of n-BA, 0.061 part of t-BH, and 0.30 part of n-OM were delivered into the polymerization vessel by drops over 120 minutes, and the reaction was continued for 60 minutes to obtain a latex-like rubber-containing multistage polymer (I-i). A solid content of the latex-like rubber-containing multistage polymer (I-i) which was measured after the polymerization was 33%.

### [Preparation of Rubber-Containing Multistage Polymers (I-ii) to (I-v)]

Latex-like rubber-containing multistage polymers (I-ii) to (I-v) were obtained in the same manner as in the case of the rubber-containing multistage polymer (I-i) except for changing components of the first elastic polymer (A1), the second elastic polymer (A2), and the hard portion (B) to those shown in Table 1. A solid content of each of the latex-like rubber-containing multistage polymers (I-ii) to (I-v) which was measured after the polymerization was 33%.

### [Preparation of Thermoplastic Polymer (II-i)]

A polymerization vessel provided with a stirrer, a cooling tube, a thermocouple, and a nitrogen introduction tube was charged with 222 parts by deionized water, 3.9 parts of ASK, 80.0 parts of MMA, 20.0 parts of BA, and 0.0008 part of n-OM at once under nitrogen while stirring, followed by heating to 45°C. Further, 6 parts of deionized water and 0.15 part of KPS were added at once, followed by heating to 55°C. After that, the reaction was continued for 2.5 hours to obtain a latex-like thermoplastic polymer (II-i). A solid content of the latex-like thermoplastic polymer (II-i) which was measured after the polymerization was 30%.

### [Preparation of Thermoplastic Polymer (II-ii)]

The same polymerization vessel as that described above was charged with 143 parts of deionized water, 1.1 parts of ASK, 40.0 parts of MMA, 2.0 parts of BA, and 0.026 part of n-OM at once under nitrogen while stirring, followed by heating to 50°C. Further, 7 parts of deionized water and 0.15 part of KPS were added at once, followed by heating to 60°C. After that, the reaction was continued, and the temperature increased once and then decreased again. When the temperature decreased to 70°C, monomer components of 44.0 parts of MMA and 14.0 parts of n-BA were delivered into the polymerization vessel by drops over 90 minutes together with 0.0087 part of n-OM, and then the reaction was continued for 120 minutes to obtain a latex-like thermoplastic polymer (II-ii). A solid content of the latex-like thermoplastic polymer (II-ii) which was measured after the polymerization was 40%.

### [Preparation of Powder-Like Acrylic Resin Composition]

The latex-like rubber-containing multistage polymers (I-i) to (I-v) and the latex-like thermoplastic polymers (II-i) and (II-ii) were mixed in accordance with the mass ratios of solid contents shown in Table 2. Next, each of the mixtures was delivered into 100 parts of hot water by drops at 70°C containing 0.8 part of calcium acetate to coagulate the latex. The temperature was increased to 95°C and maintained at 95°C for 5 minutes to attain solidification. The obtained coagulated product was separated and washed, followed by drying at 70°C for 24 hours, thereby obtaining a powder-like acrylic resin composition.

### [Molecular Weight]

Molecular weights of acetone soluble portions of the obtained powder-like acrylic resin compositions were measured by the above-described method to find that a weight average molecular weight (Mw) of the rubber-containing multistage polymer (I-i) was 41,200, Mw of the rubber-containing multistage polymer (I-ii) was 54,000, Mw of the rubber-containing multistage polymer (I-iii) was 53,300, Mw of the rubber-containing multistage polymer (I-iv) was 44,500, Mw of the rubber-containing multistage polymer (I-v) was 72,300, Mw of the thermoplastic polymer (II-i) was 3,484,300, and Mw of the thermoplastic polymer (II-ii) was 1,837,200.

### [Elastic Modulus]

Each of the powder-like acrylic resin compositions was heat-molten between SUS plates using a press-molding apparatus of Shoji Tekko K. K. at a temperature of 200°C and a pressure of 0 MPa for 10 minutes, followed by pressing at a temperature of 200°C and a pressure of 5 MPa for 5 minutes. Subsequently, cooling was conducted at a pressure of 2 MPa for 5 minutes to obtain a molded object having a thickness of 4 mm. The molded object was cut into a piece having a length of 80 mm and a width of 10 mm to prepare a test sample. A bending test was conducted by using Strograph T of Toyo Seiki Seisaku-Sho, Ltd. in accordance with ISO 178 at a temperature of 23°C, a distance between fulcrums of 64 mm, and a test speed of 2 mm/min, and an elastic modulus was calculated from a flexural stress measured at deflection of 0.088 mm and 0.44 mm. The results are shown in Table 2.

### [Glass Transition Temperature]

Molded objects (thickness: 1 mm) were obtained in the same manner as in the measurement of elastic modulus. Each of the molded objects was cut into a piece having a width of 6 mm to prepare a test sample, and a storage elastic modulus (E') and a loss elastic modulus (E") were measured by using EXSTAR DMS61 00 which is a dynamic viscoelasticity measurement device of Seiko Instruments Inc. in accordance with ISO 6721-4, at an initial chuck-to-chuck distance of 20 mm, a measurement frequency of 0.1 Hz, a measurement temperature range of -55°C to 135°C, a temperature increase rate of 2°C/min, in a nitrogen stream of 200 mL/min, and with a tensile mode. By using the values of the storage elastic modulus (E') and the loss elastic modulus (E"), a tanδ (loss tangent) at each of temperatures was calculated by the equation of tanδ = E"/E'. Next, the values of tanδ were plotted on the temperatures, and two peaks appeared. The temperature corresponding to the peak which appeared at the lower temperature was considered as Tg of the elastic polymer. The temperature corresponding to the peak which appeared at the higher temperature (80°C to 135°C) was considered as Tg of the hard portion (B). The results are shown in Table 2.

### [Melt Tension]

Each of the powder-like acrylic resin compositions was formed into pellets by melting and kneading using TEM-35, a deaeration type extruder of Toshiba Machine Co., Ltd., at a cylinder temperature of 200°C to 220°C and a die temperature of 220°C. The pellets were dried at 70°C for 12 hours. After that, the pellets were extruded by using RH-7, a twin capillary rheometer of ROSAND, at a temperature of 230°C and at a constant speed of 1.57 cm3/min from the capillary having a diameter φ of 1 mm and L/D = 16 and taken off at a constant speed of 10 m/min to measure melt tension. The results are shown in Table 2.

### Comparative Examples 1 to 3

### [Preparation of Rubber-Containing Multistage Polymer (I-iv)]

A latex-like multistage polymer (I-vi) was obtained in the same manner as in the rubber-containing multistage polymer (I-i) except for changing the components of the first elastic polymer (A1), the second elastic polymer (A2), and the hard portion (B) as shown in Table 1. A solid content of the latex-like rubber-containing multistage polymer (I-vi) measured after the polymerization was 33%.

### [Preparation of Rubber-Containing Multistage Polymer (I-vii)]

A polymerization vessel provided with a stirrer, a cooling tube, a thermocouple, and a nitrogen introduction tube was charged with 195 parts of deionized water, followed by heating to 70°C. Further, a mixture formed of 5 parts of deionized water, 0.20 part of sodium formaldehyde sulfoxylate, 0.0001 part of ferrous sulfate, and 0.0003 part of EDTA was added at once. Next, monomer components of 0.3 part of MMA, 4.5 parts of n-BA, 0.2 part of 1,3-BD, and 0.050 part of AMA were delivered into the polymerization vessel by drops while stirring under nitrogen over 3 minutes together with 0.025 part of CHP and 0.9 part of RS-610NA. After that, the reaction was continued for 15 minutes to accomplish polymerization of a first elastic polymer (A1).

Subsequently, monomer components of 2.7 parts of MMA, 40.5 parts of n-BA, 1.8 parts of 1,3-BD, and 0.450 part of AMA were delivered into the polymerization vessel by drops over 120 minutes together with 0.029 part of CHP, and then the reaction was continued for 60 minutes to accomplish polymerization of a second elastic polymer (A2).

Subsequently, monomer components of 6.9 parts of MMA, 3.1 parts of n-BA, and 0.075 part of AMA were delivered into the polymerization vessel by drops over 45 minutes together with 0.013 part of CHP. After that, the reaction was continued for 60 minutes to accomplish polymerization of an intermediate portion (C).

Subsequently, monomer components (hard portion (B) components) of 36.0 parts of MMA, 4.0 parts of n-BA, 0.059 part of CHP, and 0.13 part of n-OM were delivered into the polymerization vessel by drops over 95 minutes, and then the reaction was continued for 60 minutes to obtain a latex-like rubber-containing multistage polymer (I-vii). A solid content of the latex-like rubber-containing multistage polymer (I-vii) measured after the polymerization was 33%.

### [Preparation of Rubber-Containing Multistage Polymer (I-viii)]

A latex-like rubber-containing multistage polymer (I-viii) was obtained in the same manner as in the rubber-containing multistage polymer (I-i) except for changing the component of the hard portion (B) as shown in Table 1. A solid content of the latex-like rubber-containing multistage polymer (I-viii) measured after the polymerization was 33%.

### [Coagulation]

Each of the latex-like rubber-containing multistage polymers (I-vi) to (I-viii) was delivered by drops into 100 parts of hot water at 70°C containing 0.8 part of calcium acetate to coagulate the latex. After that, the temperature was increased to 95°C and maintained at 95°C for 5 minutes to attain solidification. Each of the obtained coagulated products was separated and washed, followed by drying at 70°C for 24 hours, thereby obtaining powder-like rubber-containing multistage polymers (I-vi) to (I-viii).

### [Molecular Weight]

Molecular weights of acetone soluble portions of the obtained powder-like rubber-containing multistage polymers (I-vi) to (I-viii) were measured by the above-described method to find that weight average molecular weights of the rubber-containing multistage polymer (I-vi), rubber-containing multistage polymer (I-vii), the thermoplastic polymer (II-viii) were 54000, 67800, and 36100.

### [Elastic Modulus]

Measured in the same manner as in Examples. The results are shown in Table 2.

### [Glass Transition Temperature]

Measured in the same manner as in Examples. The results are shown in Table 2.

### [Melt Tension]

Measured in the same manner as in Examples. The results are shown in Table 2.

[Table 1]

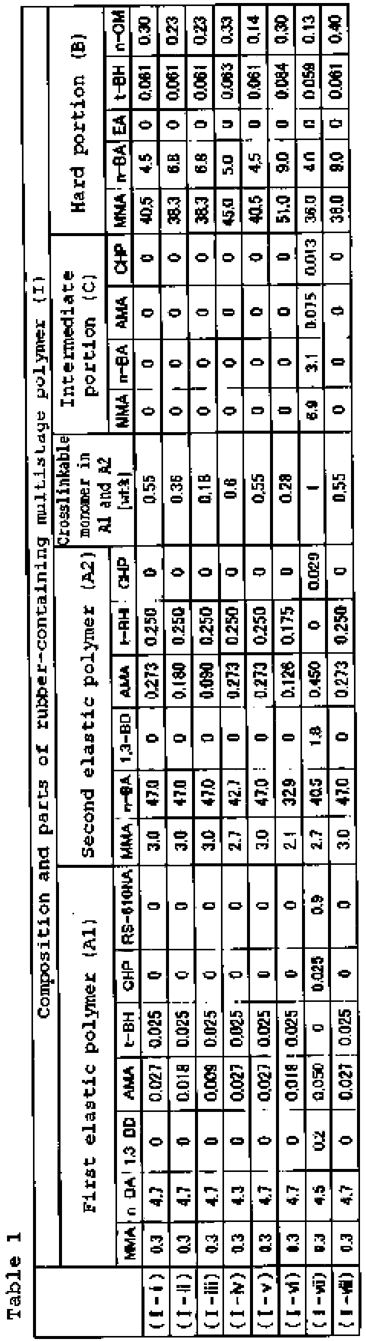

**Table 2**

| | Acrylic resin composition | | | | Elastic modulus [Mpa] | Tg [°C] | | Melt tension [N] |
|---|---|---|---|---|---|---|---|---|
| | Rubber-containing multistage polymer (I) | | Thermoplastic polymer (II) | | | | | |
| | Type | Parts | Type | Parts | | Elastic polymer (A) | Hard portion (B) | |
| Example 1 | (I-i) | 100 | (II- i) | 2.5 | 140 | -34 | 100 | 0.040 |
| Example 2 | (I-i) | 100 | (II-i) | 5.0 | 130 | -35 | 99 | 0.076 |
| Example 3 | (I-i) | 100 | (II-ii) | 3.2 | 120 | -36 | 99 | 0.044 |
| Example 4 | (I-ii) | 100 | (II-ii) | 2.5 | 80 | -34 | 89 | 0.038 |
| Example 5 | (I-ii) | 100 | (II-i) | 5.0 | 180 | -34 | 89 | 0.065 |
| Example 6 | (I-ii) | 100 | (II-ii) | 3.2 | 60 | -34 | 90 | 0.045 |
| Example 7 | (I-ii) | 100 | (II-ii) | 6.5 | 1140 | -37 | 89 | 0.056 |
| Example 8 | (I-iii) | 100 | (II-i) | 2.5 | 20 | -36 | 90 | 0.044 |
| Example 9 | (I-iii) | 100 | (II-i) | 5.0 | 130 | -35 | 92 | 0.069 |
| Example 10 | (I-iv) | 100 | (II-i) | 2.5 | 310 | -42 | 100 | 0.077 |
| Example 11 | (I-v) | 100 | - | 0 | 210 | -39 | 100 | 0.032 |
| Comparative Example 1 | (I-vi) | 100 | - | 0 | 620 | -37 | 90 | 0.017 |
| Comparative Example 2 | (I-vii) | 100 | - | 0 | 620 | -34 | 98 | 0.044 |
| Comparative Example 3 | (I-viii) | 100 | - | 0 | 50 | -34 | 79 | 0.017 |
| Comparative Example 4 | (I-i) | 100 | - | 0 | 100 | -35 | 100 | 0.022 |
| ComparativeExample 5 | (I-ii) | 100 | - | 0 | 50 | -35 | 90 | 0.024 |
| Comparative Example 6 | (I-iii) | 100 | - | 0 | 70 | -36 | 91 | 0.025 |

As is apparent from the above results, each of the acrylic resin compositions of the present invention has a small elastic modulus and high flexibility. Therefore, with the use of the acrylic resin composition of the present invention, a molded object suitable for processing at an ordinary temperature is obtained. In the case where the molded object is laminated on a substrate such as a steel plate and the substrate is subjected to bending at an ordinary temperature for achieving a shape of a member such as a window frame, a crack does not occur at the bent portion, and the substrate is not exposed to sunlight and is prevented from being corroded. The molded object to be obtained has high heat resistance. Therefore, the molded object has high heat resistance and high mechanical strength under high temperature and is suitably used in the high-temperature high sunlight regions. Further, since the acrylic resin composition of the present invention has a large melt tension value, a take-off property is favorable to hardly cause rupture in calendar molding and melt-extrusion molding. In the case where melt extrusion is performed to obtain a film, it is possible to prevent deterioration in productivity which is otherwise caused by a reduction in delivery amount, and, further, favorable thickness accuracy of the film-like molded object is attained.

In contrast, since each of Comparative Examples 1 and 2 has a large elastic modulus and low flexibility, in the case where the molded object is laminated on a substrate such as a steel plate and the substrate is subjected to bending into a shape of a window frame or the like at an ordinary temperature, there is fear that a crack occurs at the bent portion to expose the substrate to sunlight and so forth, leading to corrosion. In Comparative Example 3, Tg of the hard portion (B) is low. Therefore, the molded object to be obtained has low heat resistance and low mechanical strength under a high temperature and is not suitable for use in the high-temperature strong sunlight regions. Since Comparative Examples 4 to 6 have insufficient melt tension values, they tend to be ruptured in calendar molding and melt-extrusion molding.

### INDUSTRIAL APPLICABILITY

The acrylic resin composition of the present invention has low elastic modulus and high flexibility. Therefore, it is possible to obtain a molded object suitable for processing at an ordinary temperature. Also, the molded object obtained by molding the acrylic resin composition of the present invention has high heat resistance and is suitable for use in the high-temperature strong sunlight regions. Further, since the acrylic resin composition of the present invention has a large melt tension value, a take-off property thereof is favorable to hardly cause rupture in calendar molding and melt-extrusion molding and thus has excellent workability.

## Claims

1. An acrylic resin composition comprising a rubber-containing multistage polymer (I) and 0 to 10 parts by mass of a thermoplastic polymer (II) (relative to 100 parts by mass of the rubber-containing multistage polymer (I)) and satisfying the following conditions (1), (2), and (3).
(1) A value of flexural modulus of a molded object, which is measured in accordance with ISO 178 at a temperature of 23°C and a test speed of 2 mm/min, is 400 MPa or less. The molded object has a thickness of 4 mm, a length of 80 mm, and a width of 10 mm.
(2) A value of a peak which appears in a range of 80°C or higher and is measured with a tension mode of a dynamic viscoelasticity measurement device is 85°C or more. A test piece used in the measurement is a sheet having a width of 6 mm and a thickness of 1 mm and obtained by molding the acrylic resin composition, and an initial chuck-to-chuck distance of the test piece is 2 cm.
(3) A value of melt tension of a strand obtained by extruding the acrylic resin composition under the conditions of a capillary diameter φ = 1 mm, L/D = 16, and a temperature of 230°C at a constant speed (1.57 cm³/min), which is measured by taking off the strand at a constant speed (10 m/min), is 0.03 N or more.

2. The acrylic resin composition according to claim 1, wherein the rubber-containing multistage polymer (I) and the thermoplastic polymer (II) are defined as follows.
Rubber-Containing Multistage Polymer (I)
A rubber-containing multistage polymer obtainable by polymerizing a monomer (b) comprising alkyl methacrylate containing an alkyl group having 1 to 4 carbon atoms in the presence of an elastic polymer (A) obtained by polymerizing a monomer (a) comprising at least one monomer selected from the group consisting of alkyl acrylate (a1) containing an alkyl group having 1 to 8 carbon atoms and alkyl methacrylate (a2) containing an alkyl group having 1 to 4 carbon atoms and a crosslinkable monomer (a4).
Thermoplastic Polymer (II)
A thermoplastic polymer which is a polymer consisting of 50 to 100 mass% of a methylmethacrylate unit and 0 to 50 mass% of at least one vinyl monomer unit copolymerizable with the methylmethacrylate unit and having a reduced viscosity of 0.2 to 2 g/L which is measured by dissolving 0.1 g thereof into 100 mL of chloroform at 25°C.

3. The acrylic resin composition according to claim 2, wherein the following conditions (4) and (5) are satisfied.
(4) A ratio of the elastic polymer (A) in 100 mass% of the rubber-containing multistage polymer (I) is 50 mass% or more.
(5) An amount of the crosslinkable monomer (a4) comprised in the elastic polymer (A) of the rubber-containing multistage polymer (I) is 0.15 to 0.60 mass% relative to 100 mass% in total of the monomers of the elastic polymer (A).

4. A molded object obtained by molding the acrylic resin composition defined in claim 1.

5. A method for producing a film by subjecting the acrylic resin composition defined in claim 1 to calendar processing.

6. An acrylic resin film obtained by the method defined in claim 5.
